# EUROPÄISCHE PATENTSCHRIFT

(11) **EP 2 590 776 B1**
(45) Veröffentlichungstag und Bekanntmachung des Hinweises auf die Patenterteilung: **14.05.2014**
(21) Anmeldenummer: 11760738.2
(22) Anmeldetag: 09.09.2011
(51) Int. Cl.: B23K 15/00, B23K 37/053, F01D 5/06

(54) **VERFAHREN ZUR STIRNSEITIGEN VERBINDUNG ZWEIER STANGEN MITTLES ELEKTRONSTRAHLSCHWEISSENS**
METHOD OF JOINING TWO BARS END-ON BY MEANS OF ELECTRON BEAM WELDING
PROCÉDÉ DE SOUDAGE PAR FAISCEAU D'ÉLECTRONS POUR RELIER DEUX BARRES DU CÔTÉ FRONTAL

(30) Priorität: 09.09.2010 DE 102010040502
(43) Veröffentlichungstag der Anmeldung: 15.05.2013
(73) Patentinhaber: Siemens Aktiengesellschaft, 80333 München (DE)
(72) Erfinder: BIESENBACH, Martin, 40225 Düsseldorf (DE)
(86) Internationale Anmeldenummer: PCT/EP2011/065599
(87) Internationale Veröffentlichungsnummer: WO 2012/032138

(56) Entgegenhaltungen:
- JP-A- 2 127 986
- JP-A- 10 006 036
- US-A- 4 063 062
- US-A- 4 086 690

## Beschreibung

Die Erfindung betrifft ein Verfahren zur stirnseitigen Verbindung einer ersten Stange mit einer zweiten Stange mittels Elektronenstrahlschweißens gemäß dem Oberbegriff des Anspruchs 1 (siehe, z.B., US 4 063 062).

Insbesondere bei der Fertigung von Wellen für Turbomaschinen, beispielsweise Turboverdichtern, Dampfturbinen oder Gasturbinen werden häufig Wellenstücke stirnseitig stumpf aneinander geschweißt, indem mittels eines Elektronenstrahlschweißapparates ohne weiteren Zusatzwerkstoff die beiden aneinander gelegten Stangenstücke im Bereich der aneinanderstoßenden Enden mittels eines in die Fuge eintretenden Elektronenstrahls zu einer Schmelze gebracht werden, die nach dem Erkalten in einer Verbindung resultiert. Die Hauptschwierigkeit einer elektronenstrahlgeschweißten Radialnaht bei einer Welle oder einem sonstigen Stangenmaterial besteht in der Fertigung des fehlerfreien Nahtanfangs und des Nahtendes. Unter dem Nahtanfang ist der Einfädelbereich des Elektronenstrahls zu verstehen und unter dem Nahtende der Ausfädelbereich des Elektronenstrahls aus dem Werkstoff. Weitere Störungen der Homogenität des Werkstoffgefüges ergeben sich durch etwaige Überschweißungen der bereits geschweißten Schweißnaht bei Überlappungen von Wirkungsbereichen des Elektronenstrahls in dem Werkstoff während unterschiedlicher Schweißvorgänge. Zusätzliche Schwierigkeiten ergeben sich bei kleinen Wellendurchmessers bzw. kleinen Stangendicken durch den Wärmestau im Bereich der Bauteilmitte, wodurch eine fehlerfreie Schweißung im Überlappbereich und im Ausfädelbereich der Schweißverbindung nicht möglich ist.

Selbst die aufwändigsten modernen Elektronenstrahlsteuerungen vermögen die beschriebenen Schweißfehler nicht gänzlich zu unterbinden.

Ausgehend von den beschriebenen Problemen und Nachteilen des Standes der Technik hat es sich die Erfindung zur Aufgabe gemacht, die Qualität der eingangs beschriebenen Schweißung zu verbessern ohne die Steuerung des Elektronenstrahls zusätzlich komplizierter zu machen.

Die US 4,063,062 beschreibt eine herkömmliche elektronische Strahlschweißung von runden Wellenabschnitten stirnseitig aneinander, wobei ein Einfädelbereich und ein Ausfädelbereich die Homogenität der Schweißung stören.

Zur Lösung wird erfindungsgemäß ein Verfahren der eingangs definierten Art vorgeschlagen mit den zusätzlichen Merkmalen des kennzeichnenden Teils des Hauptanspruchs 1. Die rückbezogenen Unteransprüche beinhalten vorteilhafte Weiterbildungen der Erfindung.

Die erfindungsgemäße Umhüllung einer Fügezone der beiden aneinander stoßenden Enden der zur verbindenden Stangen mittels einer Manschette mit dem Einfädelbereich und dem Ausfädelbereich des Elektronenstrahls außerhalb des eigentlich zu fügenden Materials anzuordnen ermöglicht es, in der Fügezone der eigentlich zu verbindenden Teile eine vollkommen homogene Materialstruktur zu erzeugen. Das erfindungsgemäße Verfahren unterscheidet sich außerdem von dem Stand der Technik dadurch, dass eigentlich nicht, wie ursprünglich angestrebt nur zwei Bauteile miteinander verbunden werden, sondern vielmehr drei Bauteile miteinander durch die Elektronenstrahlschweißung in Verbindung treten.

Zweckmäßig weist die Manschette eine Innenkontur auf, die an die Außenkontur der Stangen im Bereich der Schweißstelle angepasst ist. Um einen Effekt ähnlich dem Einfädeln oder dem Ausfädeln des Materialübergangs von der Manschette auf die beiden aneinander stoßenden Enden der Stangen zu verhindern, ist die Fertigung einer Passung an der Manschette relativ zu den beiden Stangenenden zweckmäßig im Genauigkeitsbereich von +/- 0,1mm bezogen auf den Durchmesser. Weiterhin ist es sinnvoll, wenn die Manschette eine Teilfuge aufweist, die derart angeordnet ist, dass die Manschette um die Profile der Stangen herumgelegt werden kann. Dies ist bei einem kreisrunden Querschnitt beispielsweise der Fall, wenn die beiden Teile der Manschette jeweils einen Halbkreis als Ausnehmung im Querschnitt aufweisen. Die zweiteilige oder mehrteilige Manschette wird entweder mechanisch, durch Heftnähte oder durch angeschweißte Bügel zusammengehalten. Im Interesse einer einfachen Handhabung kann die Manschette einen rechteckigen Außenquerschnitt aufweisen. Der rechteckige Außenquerschnitt hat außerdem den Vorteil, dass bei einer Fortschrittsrichtung des Elektronenstrahlapparates parallel zu der Oberfläche der Manschette die Eindringtiefe des Elektronenstrahls als konstant vorausgesetzt, sich ein homogenes Materialgefüge an der Schweißstelle ergibt. Zweckmäßig besteht die Manschette im Bereich der Fügezone aus dem gleichen Material, wie die beiden einander zu fügenden Stangen zumindest im Bereich der Schweißung, so dass ein etwaiger Materialübergang zwischen den drei beteiligten Teilen in einem homogenen Materialgefüge im Bereich der Fügezone bzw. Schweißstelle resultiert. Auf diese Weise kann ein etwaiger Materialmangel in der Fügezone - beispielsweise durch einen minimal verbleibenden axialen Spalt im Bereich der beiden Stangenenden, die miteinander zu verbinden sind - durch den dann als Zusatzwerkstoff bereitstehenden Werkstoff der Manschette ausgeglichen werden.

Eine Entfernung der Manschette erfolgt bevorzugt spanend, im Falle der Welle schlicht durch Überdrehen der Schweißstelle.

Bei Wellendurchmessern bzw. Dickenverläufen entlang einer Fortschrittsrichtung des Schweißapparates, die kleiner sind als die maximale Einschweißtiefe des Elektronenstrahls kann der Elektronenstrahl den Wellenquerschnitt bzw. Stangenquerschnitt durch eine einfache Elektronenstrahlsteuerung von links nach rechts oder umgekehrt entlang der Schweißstelle geführt werden. Auf diese Weise bleibt das Elektronenstrahlende immer im Manschettenwerkstoff, wenn der Manschettenwerkstoff in Richtung der Eindringtiefe des Elektronenstrahls entsprechend dick genug ausgebildet ist. Der Einfädelbereich und der Ausfädelbereich können erfindungsgemäß sehr kurz gewählt werden, da die hier auftretenden Schweißfehler nach dem Schweißen mechanisch abgearbeitet werden. Dementsprechend kann ohne Rücksicht auf Schweißfehler die Steuerung des Elektronenstrahls in dem Manschettenwerkstoff erfolgen. Ein zusätzlicher Vorteil ergibt sich bei kleinen Wellendurchmessern, die kleiner sind als die maximale Einschweißtiefe des Elektronenstrahls dadurch, dass unvermeidlich kleine Schweißfehler im Schweißnahtgrund, so genannte Spikes (spitze Schmelznadeln) lediglich im Manschettenwerkstoff vorhanden sind und ebenfalls bei der Endbearbeitung von der Stange oder der Welle mechanisch entfernt werden.

Wird der Wellendurchmesser größer als die maximale Einschweißtiefe, so kann bis zu einem Wellenradius der ungefähr der maximalen Einschweißtiefe des Elektronenstrahls entspricht, durch eine Schweißung von zwei Seiten die Verbindungsschweißung ausgeführt werden. Diese beiden Seiten liegen sich bevorzugt direkt einander gegenüber, so dass es mindestens eine minimale Überlappung zwischen der Eindringspitze des Elektronenstrahls bzw. der Einschweißtiefe bei der Schweißung von der ersten Seite entlang einer ersten Fortschrittsrichtung und der Eindringtiefe bzw. der Einschweißtiefe bei dem Schweißen entlang einer zweiten Fortschrittsrichtung gibt.

Bei noch größeren Wellendurchmessern, bei denen der Wellenradius die maximale Einschweißtiefe, die mit dem Elektronenstrahlapparat erreichbar ist, übersteigt, kann es zweckmäßig sein, wenn nicht nur von zwei gegenüberliegenden Seiten während der Schweißungen der Elektronenstrahl in das Werkstück eindringt, sondern auch von dazu schräg angeordneten Seiten der Manschette bzw. bei einem rechteckigen Querschnitt der Elektronenstrahl gleichzeitig oder nacheinander von den Oberflächen aller vier Seiten der Manschette in die Werkstücke eindringt.

Die Wellenquerschnitte bzw. Stangenquerschnitte der zu verbindenden Werkstücke können rund, oval, dreieckig, quadratisch, rechteckig, sechseckig oder sonst wie vieleckig sein. Ebenso sind Hinterschneidungen oder konkave Konturen möglich. Grundsätzlich ist ein beliebiges Stangenprofil mittels des erfindungsgemäßen Verfahrens verbindbar.

Im Folgenden ist die Erfindung anhand eines speziellen Ausführungsbeispiels unter Bezugnahme auf Zeichnungen näher beschrieben. Es zeigen:
- Figuren 1 - 3: jeweils einen Querschnitt durch eine erfindungsgemäße Stange mit einer erfindungsgemäßen Manschette an einer Verbindungsstelle zweier Stangen zur Illustration des erfindungsgemäßen Verfahrens,
- Figur 4: einen Längsschnitt durch eine Anordnung zweier Stangen und einer Hülse sowie einem Elektronenstrahlschweißapparat.

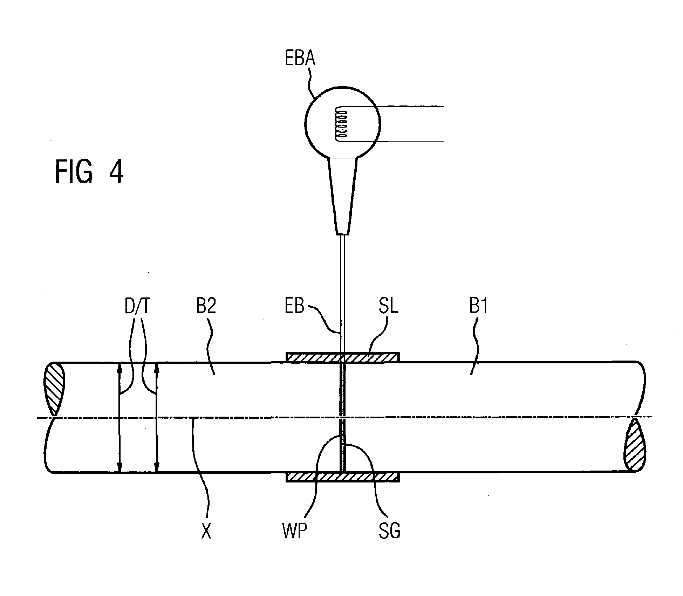

Die Figur 4 zeigt einen Längsschnitt durch eine erfindungsgemäße Hülse SL, die um eine Fügestelle zweier stirnseitig aneinander stumpf anstoßender Stangen, einer ersten Stange B1 und einer zweiten Stange B2 angeordnet ist. Zwischen den beiden Stangen B1, B2 befindet sich eine sehr schmale Fuge SG mit Abmessungen im Bereich der unvermeidlichen Ungenauigkeit. Die sehr schmale Fuge SG reduziert sich in Bereichen des Stirnflächenkontaktes zwischen den Stangen B1, B2 auf eine Breite von bis zu 0. Die beiden Stangen B1, B2 erstrecken sich entlang einer gemeinsamen Längsachse X und sind zueinander koaxial ausgerichtet. Radial zur Längsachse X ist ein Elektronenstrahlschweißapparat EBA angeordnet, der einen Elektronenstrahl EB auf den Bereich der schmalen Fuge SG radial emittiert und auf diese Weise die beiden Stangen B1, B2 an dieser Schweißstelle WP mit der Schmelze verbindet.

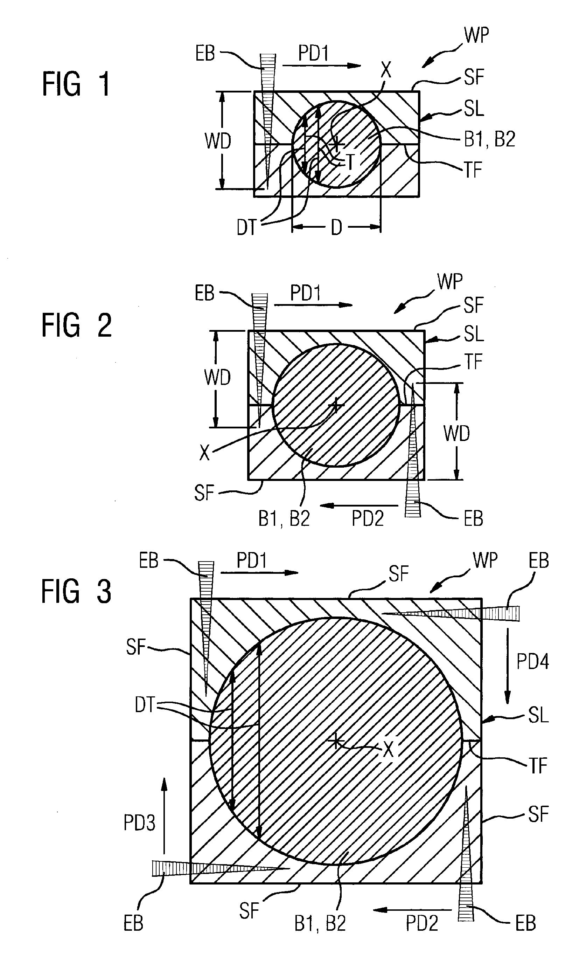

Die Figuren 1 bis 3 stellen jeweils unterschiedliche Durchmesser D der Stangen B1, B2 dar und damit verbundene unterschiedliche erfindungsgemäße Ausführungen des Schweißverfahrens. Der Durchmesser D der Stangen B1, B2 ist bei der Illustration der Figur 1 kleiner als die maximale Einschweißtiefe WD des Elektronenstrahls EB entlang einer ersten Fortschrittsrichtung PD1 des Elektronenstrahlschweißapparates EBA. Entscheidend für die Auswahl des Schweißverfahrens nach der Erfindung ist die maximale Dicke T eines Dickenverlaufs DT illustriert in beispielsweise Figur 1 des Querschnitts der Stange B1, B2 entlang einer ersten Fortschrittsrichtung PD1 bzw. weiterer Fortschrittsrichtungen PD1, PD2, PD3, PD4 im Bereich der Schweißstelle WP in den Figuren 2 und 3. In den Fällen eines kreisrunden Querschnittes, wie in den Figuren 1 bis 3 dargestellt ist, ist die maximale Dicke T gleich dem Durchmesser D der Stangen B1, B2.

In einem ersten Schritt des erfindungsgemäßen Verfahrens werden die beiden Stangen B1, B2 zueinander entlang einer Längsachse X ausgerichtet. Anschließend wird die zweiteilige Manschette SL um die Fügestelle bzw. Schweißstelle WP der Stangen B1, B2 gelegt, so dass die Manschette SL die Schweißstelle WP in Umfangsrichtung bezogen auf die Längsachse X umgibt. Anschließend erfolgt das in den Figuren 1 bis 3 dargestellte Elektronenstrahlschweißen mittels eines entlang einer Fortschrittsrichtung PD1 - PD4 sich bewegenden Elektronenstrahlschweißapparates EBA entlang der Oberfläche SF der Manschette SL. Statt einer Bewegung des Elektronenstrahlschweißapparates EBA entlang der Oberfläche SF der Manschette SL ist es im Sinne der Erfindung auch möglich, dass sich das zu fügende Bauteil selbst (Stangen B1, B2) relativ zu dem Elektronenstrahl EB bewegt. Entscheidend ist hierbei lediglich die Relativbewegung zwischen dem zu fügenden Bauteil und dem Elektronenstrahlschweißapparat EBA. Schließlich wird die Manschette SL von den Stangen B1, B2 entfernt mittels eines mechanischen spanenden Verfahrens, beispielsweise durch Drehen oder Fräsen.

Die Manschette weist einen rechteckigen Außenquerschnitt auf und hat eine Teilfuge TF, die derart angeordnet ist, dass sich die Manschette SL um die Stangen B1, B2 legen lässt. In Figur 1 ist der Fall dargestellt, dass die Einschweißtiefe WD des Elektronenstrahls EB größer ist als der Durchmesser D bzw. die maximale Dicke T der Stange B1, B2 entlang des Dickenverlaufes DT entlang der ersten Fortschrittsrichtung PD1. Dementsprechend reicht ein einmaliges Durchfahren der Anordnung aus den beiden Stangen B1, B2 und der Manschette SL aus, um die Stangen vollständig miteinander durch die Schweißung zu verbinden. In geringen Mengen kann das Material der Manschette SL, welches mit dem Material der beiden Stangen B1, B2 identisch ist als Zusatzwerkstoff zur Auffüllung von Fehlstellen im Bereich der Schweißnaht dienen.

Die Figur 2 zeigt einen Fall, dass die maximale Eindringtiefe WD des Elektronenstrahls EB kleiner als die maximale Dicke T der Stangen B1, B2 entlang der ersten Fortschrittsrichtung PD1 ist jedoch größer als die Hälfte dieser maximalen Dicke T bzw. des Durchmessers D, weil es sich um einen kreisrunden Querschnitt handelt. Dementsprechend wird das Werkstück in der in Figur 2 dargestellten Weise in zwei Schritten mit dem Elektronenstrahl EB geschweißt. In einem ersten Schritt verfährt der Elektronenstrahlschweißapparat EBA (oder das Bauteil bewegt sich unter einem Elektronenstrahl EB) entlang einer ersten Fortschrittsrichtung PD1 entlang der Schweißstelle WP und der Oberfläche SF der Hülse SL und in einem zweiten Schritt verfährt der Elektronenstrahlschweißapparat EBA (oder das Bauteil bewegt sich unter einem Elektronenstrahl EB) in antiparalleler zweiter Fortschrittsrichtung PD2 auf der gegenüberliegenden Seite der rechteckig ausgebildeten Hülse SL ebenfalls parallel zur Oberfläche SF, so dass zwischen dem ersten Schweißdurchgang und dem zweiten Schweißdurchgang ein Überlappung geschieht.

Bei dem in Figur 3 dargestellten Ausführungsbeispiel ist die maximale Dicke T bzw. der Durchmesser D der runden Stangen B1, B2 mehr als zweimal so groß wie die maximale Einschweißtiefe WD des Elektronenstrahls EB und dementsprechend erfolgt eine Schweißung in vier Schritten, wobei die Schritte sich jeweils durch ihre unterschiedliche Fortschrittsrichtung PD1 - PD4 des Elektronenstrahlschweißapparates EBA und die unterschiedliche Ausrichtung des Elektronenstrahls EB in der Ebene der Schweißstelle WP unterscheiden. Im konkreten Beispiel der Figur 3 handelt es sich um vier senkrecht zueinander ausgerichtete Fortschrittsrichtungen, die jeweils parallel zu jeweils ebenen Oberflächenabschnitt der Hülse SL ausgerichtet sind.

## Patentansprüche

1. Verfahren zur stirnseitigen Verbindung einer ersten Stange (B1) mit einer zweiten Stange (B2) mittels Elektronenstrahlschweißens an einer Schweißstelle (WP), mit dem folgenden Schritt:
- Ausrichten der beiden Stangen (B1, B2) zueinander entlang einer Längsachse (X), **gekennzeichnet durch** die folgenden Schritte:
- Anlegen einer Manschette (SL), die die Schweißstelle (WP) in Umfangsrichtung bezogen auf die Längsachse (X) umgibt,
- Schweißen an der Schweißstelle (WP) mittels Elektronenstrahlschweißens, wobei ein Elektronenstrahlschweißapparat (EBA) mit einem Elektronenstrahl (EB) entlang einer Fortschrittsrichtung (PD), relativ zu einer Oberfläche (SF) der Manschette (SL) und entlang der Schweißstelle (WP) geführt bewegt wird,
wobei der Elektronenstrahl derart geführt wird, dass ein Einfädelbereich und ein Ausfädelbereich des Elektronenstrahls außerhalb des eigentlich zu fügenden Materials der ersten Stange (B1) und der zweiten Stange (B2) angeordnet ist,
- Entfernen der Manschette (SL).

2. Verfahren nach Anspruch 1,
wobei die Manschette (SL) an die Außenkontur der Stangen (B1, B2) im Bereich der Schweißstelle (WP) angepasst ist.

3. Verfahren nach Anspruch 1 oder 2,
wobei die Manschette (SL) eine rechteckige Außenkontur aufweist.

4. Verfahren nach Anspruch 1, 2 oder 3,
wobei die Manschette (SL) spanend entfernt wird.

5. Verfahren nach einem der vorhergehenden Ansprüche 1 bis 4,
wobei die maximale projizierte Einschweißtiefe (WD) des Elektronenstrahls (EB) senkrecht zu einer ersten Fortschrittsrichtung (PD1) eines Elektronenstrahlschweißapparates (EBA) entlang der Schweißstelle (WP) größer als die größte Dicke (T) der Stangen (B1, B2) im Bereich der Schweißstelle (WP) entlang eines Dickenverlaufs (DT) entlang der ersten Fortschrittsrichtung (PD1) des Elektronenschweißapparates (EBA) ist und der Elektronenstrahlschweißapparat (EBA) entlang der ersten Fortschrittsrichtung (PD1) mit dem Elektronenstrahl (EB) in das Material der Manschette (SL) an einem ersten Ende (E1) eintritt und aus dem Material der Manschette (SL) an einem zweiten Ende (E2) austritt.

6. Verfahren nach einem der vorhergehenden Ansprüche 1 bis 4,
wobei die maximale Einschweißtiefe des Elektronenstrahls (EB) senkrecht zu einer ersten Fortschrittsrichtung (PD1) eines Elektronenstrahlschweißapparates (EBA) entlang der Schweißstelle (WP) kleiner ist als die größte Dicke (T) der Stange (B1, B2) entlang eines Dickenverlaufs (DT) der ersten Fortschrittsrichtung (PD1) des Elektronenstrahlschweißapparates (EBA) und der Elektronenstrahl (EB) in das Material der Manschette (SL) an einem ersten Ende (E1) eintritt und aus dem Material der Manschette (SL) an einem zweiten Ende (E2) austritt, wobei der Elektronenstrahlschweißapparat (EBA) entlang einer zweiten Fortschrittsrichtung (PD2) relativ zu der Oberfläche (SF) auf der gegenüberliegenden Seite der Hülse (SL) an der Schweißstelle (WP) geführt wird, derart, dass der Elektronenstrahl (EB) in das Material der Manschette (SL) an einem dritten Ende eintritt und aus dem Material der Manschette (SL) an einem vierten Ende austritt.

7. Verfahren nach Anspruch 6,
wobei die erste Fortschrittsrichtung (PD1) parallel zur zweiten Fortschrittsrichtung (PD2) ist.

8. Verfahren nach Anspruch 6,
wobei die erste Fortschrittsrichtung (PD1) antiparallel zur zweiten Fortschrittsrichtung (PD2) ist.

9. Verfahren nach Anspruch 6,
wobei der Elektronenstrahlschweißapparat (EBA) von mehreren ebenen Seiten der Hülse (SL) entlang der Schweißstelle (WP) entlang verschiedener Fortschrittsrichtungen (PPI) relativ zu der Oberfläche (SF) über die Oberfläche (SF) geführt wird, derart, dass der Elektronenstrahl (EB) in das Material der Manschette (SL) an einem Ende eintritt und aus dem Material der Manschette (SL) an einem anderen Ende austritt.

## Claims

1. Method for joining a first bar (B1) end-on to a second bar (B2) by means of electron beam welding at a welding point (WP), having the following step:
- orienting the two bars (B1, B2) in relation to one another along a longitudinal axis (X), **characterized by** the following steps:
- applying a sleeve (SL), which surrounds the welding point (WP) in the circumferential direction with respect to the longitudinal axis (X),
- welding at the welding point (WP) by means of electron beam welding, wherein an electron beam welding apparatus (EBA) is moved guided with an electron beam (EB) along a progress direction (PD), relative to a surface (SF) of the sleeve (SL) and along the welding point (WP),
wherein the electron beam is guided in such a manner that a region in which the electron beam is introduced and a region in which it is removed are arranged outside the material which is actually to be joined of the first bar (B1) and of the second bar (B2),
- removing the sleeve (SL).

2. Method according to Claim 1,
wherein the sleeve (SL) is matched to the outer contour of the bars (B1, B2) in the region of the welding point (WP).

3. Method according to Claim 1 or 2,
wherein the sleeve (SL) has a rectangular outer contour.

4. Method according to Claim 1, 2 or 3,
wherein the sleeve (SL) is removed by cutting.

5. Method according to one of the preceding Claims 1 to 4,
wherein the maximum projected weld penetration depth (WD) of the electron beam (EB) perpendicular to a first progress direction (PD1) of an electron beam welding apparatus (EBA) along the welding point (WP) is greater than the greatest thickness (T) of the bars (B1, B2) in the region of the welding point (WP) along a thickness profile (DT) along the first progress direction (PD1) of the electron beam welding apparatus (EBA), and the electron beam welding apparatus (EBA) passes into the material of the sleeve (SL) at a first end (E1) and emerges from the material of the sleeve (SL) at a second end (E2) along the first progress direction (PD1) with the electron beam (EB).

6. Method according to one of the preceding Claims 1 to 4,
wherein the maximum weld penetration depth of the electron beam (EB) perpendicular to a first progress direction (PD1) of an electron beam welding apparatus (EBA) along the welding point (WP) is smaller than the greatest thickness (T) of the bars (B1, B2) along a thickness profile (DT) of the first progress direction (PD1) of the electron beam welding apparatus (EBA), and the electron beam (EB) passes into the material of the sleeve (SL) at a first end (E1) and emerges from the material of the sleeve (SL) at a second end (E2), wherein the electron beam welding apparatus (EBA) is guided along a second progress direction (PD2) relative to the surface (SF) on the opposite side of the sleeve (SL) at the welding point (WP), in such a manner that the electron beam (EB) passes into the material of the sleeve (SL) at a third end and emerges from the material of the sleeve (SL) at a fourth end.

7. Method according to Claim 6,
wherein the first progress direction (PD1) is parallel to the second progress direction (PD2).

8. Method according to Claim 6,
wherein the first progress direction (PD1) is antiparallel to the second progress direction (PD2).

9. Method according to Claim 6,
wherein the electron beam welding apparatus (EBA) is guided over the surface (SF) from a plurality of planar sides of the sleeve (SL) along the welding point (WP) along various progress directions (PPI) relative to the surface (SF), in such a manner that the electron beam (EB) passes into the material of the sleeve (SL) at one end and emerges from the material of the sleeve (SL) at another end.

## Revendications

1. Procédé de liaison du côté frontal d'une première barre ( B1 ) à une deuxième barre ( B2 ) au moyen d'un soudage par faisceau d'électrons en un point ( WP ) de soudure ayant le stade suivant :
- alignement des deux barres ( B1 , B2 ) l'une par rapport à l'autre le long d'un axe ( X ) longitudinal, **caractérisé par** les stades suivants :
- application d'une manchette ( SL ) qui entoure le point ( WP ) de soudure dans la direction périphérique rapportée à l'axe ( X ) longitudinal,
- soudage au point ( WP ) de soudure au moyen d'un soudage par faisceau d'électrons, dans lequel on déplace de manière guidée un appareil ( EBA ) de soudage par faisceau d'électrons ayant un faisceau ( EB ) d'électrons le long d'un sens ( PD ) d'avance, par rapport à une surface ( SF ) de la manchette ( SL ) et le long du point ( WP) de soudure,
dans lequel on guide le faisceau d'électrons de manière à ce qu'une zone d'entrée et une zone de sortie du faisceau d'électrons soient disposées à l'extérieur du matériau à joindre proprement dit de la première barre ( B1 ) et de la deuxième barre ( B2 ),
- et enlèvement de la manchette ( SL ).

2. Procédé suivant la revendication 1,
dans lequel la manchette ( SL ) est adaptée au contour extérieur des barres ( B1 , B2 ) dans la zone du point ( WP ) de soudure.

3. Procédé suivant les revendications 1 ou 2,
dans lequel la manchette ( SL ) a un contour extérieur rectangulaire.

4. Procédé suivant les revendications 1, 2 ou 3,
dans lequel la manchette ( SL ) est enlevée par enlèvement de copeaux.

5. Procédé suivant l'une des revendications 1 à 4,
dans lequel la profondeur ( WD ) de soudage maximum en projection du faisceau ( EB ) d'électrons perpendiculairement à un premier sens ( PD1 ) d'avance d'un appareil ( EBA ) de soudage par faisceau d'électrons le long du point ( WP ) de soudure est plus grande que l'épaisseur ( T ) la plus grande des barres ( B1 , B2 ) dans la zone du point ( WP ) de soudure le long d'un tracé ( DT ) d'épaisseur du premier sens ( PD1 ) d'avance de l'appareil ( EBA ) de soudage par faisceau d'électrons et l'appareil ( EBA ) de soudage par faisceau d'électrons, le faisceau ( EB ) d'électrons entre dans le premier sens ( PD1 ) d'avance dans le matériau de la manchette ( SL ) à une première extrémité ( E1 ) et sort du matériau de la manchette ( SL ) à une deuxième extrémité ( E2 ).

6. Procédé suivant l'une des revendications 1 à 4,
dans lequel la profondeur ( WD ) de soudage maximum du faisceau ( EB ) d'électrons perpendiculairement à un premier sens ( PD1 ) d'avance d'un appareil ( EBA ) de soudage par faisceau d'électrons le long du point ( WP ) de soudure est plus petite que l'épaisseur ( T ) la plus grande des barres ( B1 , B2 ) le long d'un tracé ( DT ) d'épaisseur du premier sens ( PD1 ) d'avance de l'appareil ( EBA ) de soudage par faisceau d'électrons et le faisceau ( EB ) d'électrons entre dans le matériau de la manchette ( SL ) à une première extrémité ( E1 ) et sort du matériau de la manchette ( SL ) à une deuxième extrémité ( E2 ), dans lequel l'appareil ( EBA ) de soudage par faisceau d'électrons est guidé le long d'un deuxième sens ( PD2 ) d'avance par rapport à la surface ( SF ) du côté opposé de la manchette ( SL ) au point ( WP ) de soudure de manière à ce que le faisceau ( EB ) d'électrons entre dans le matériau de la manchette ( SL ) à une troisième extrémité et sorte du matériau de la manchette ( SL ) à une quatrième extrémité.

7. Procédé suivant la revendication 6,
dans lequel le premier sens ( PD1 ) d'avance est parallèle au deuxième sens ( PD2 ) d'avance.

8. Procédé suivant la revendication 6,
dans lequel le premier sens ( PD1) d'avance est anti-parallèle au deuxième sens ( PD2 ) d'avance.

9. Procédé suivant la revendication 6,
dans lequel l'appareil ( EBA ) par soudage de faisceau d'électrons est guidé sur la surface ( SF ) par plusieurs côtés plans de la manchette ( SL ) le long du point ( WP ) de soudure le long de divers sens ( PPI ) d'avance par rapport à la surface ( SF ) de manière à ce que le faisceau ( EB ) d'électrons entre dans le matériau de la manchette ( SL ) à une extrémité et sorte du matériau de la manchette ( SL ) à une autre extrémité.
